# EUROPÄISCHE PATENTSCHRIFT

(11) **EP 2 268 509 B1**
(45) Veröffentlichungstag und Bekanntmachung des Hinweises auf die Patenterteilung: **21.03.2012**
(21) Anmeldenummer: 09736023.4
(22) Anmeldetag: 07.04.2009
(51) Int. Cl.: B60R 21/231, B60R 21/233

(54) **GASSACKANORDNUNG MIT EINEM UNTERSCHIEDLICHE AUSSTRÖMQUERSCHNITTE AUFWEISENDEN TEXTILEN DEFLEKTORELEMENT**
AIRBAG ARRANGEMENT COMPRISING A TEXTILE DEFLECTOR ELEMENT HAVING DIFFERENT OUTFLOW CROSS-SECTIONS
AGENCEMENT DE COUSSIN GONFLABLE DE SÉCURITÉ POURVU D'UN ÉLÉMENT DÉFLECTEUR EN TEXTILE PRÉSENTANT DIFFÉRENTES SECTIONS TRANSVERSALES DE SORTIE

(30) Priorität: 22.04.2008 DE 102008020122
(43) Veröffentlichungstag der Anmeldung: 05.01.2011
(73) Patentinhaber: Autoliv Development AB, 447 83 Vårgårda (SE)
(72) Erfinder: ORAL, Ridvan, 85250 Altomünster (DE); ANDERSSON, Stefan, S-441 96 Alingsas (SE); TREVENA, Tony, S- 44732 Vargarda (SE); TAUBERT, Stefan, 86316 Friedberg (DE); HENRIKSSON, Ola, S- 44732 Vargarda (SE); HENRICSSON, Peter, S- 42658 Västra Frölunda (SE); KROLL, Jack, S- 44850 Tollered (SE); KJELL , Frederik, S- 44140 Alingsas (SE); KJELL, Jonas, S- 44196 Alingsas (SE)
(74) Vertreter: Müller, Karl-Ernst
(86) Internationale Anmeldenummer: PCT/EP2009/002545
(87) Internationale Veröffentlichungsnummer: WO 2009/129931

(56) Entgegenhaltungen:
- EP-A- 1 310 409
- EP-A- 1 369 317
- WO-A-2006/117121
- WO-A-2006/121567

## Beschreibung

Die Erfindung betrifft eine Gassackanordnung mit einem wenigstens eine aufblasbare Kammer aufweisenden Gassack und mit einem außerhalb der aufblasbaren Kammer angeordneten Gasgenerator, wobei zur Verbindung des Gasgenerators mit der aufblasbaren Kammer ein an den Gasgenerator angeschlossenes und in die aufblasbare Kammer reichendes, als rohrförmiger Körper ausgestaltetes Deflektorelement aus einem textilen Gewebe vorgesehen ist, und wobei der Querschnitt des rohrförmigen Deflektorelements durch in seiner Längsrichtung angeordnete Verbindungen von Bereichen seiner die Rohrwandung bildenden Hülle in einen Gaseintrittsbereich und einen Gasausströmbereich unterteilt ist und die Verbindungen eine Überströmöffnung für den radial zur Längsachse des rohrförmigen Deflektorelements vom Gaseintrittsbereich zum Gasausströmbereich verlaufenden Gasstrom aussparen und die beiden einander gegenüberliegenden stirnseitigen Öffnungen des Gasausströmbereichs jeweils einen unterschiedlichen Ausströmquerschnitt aufweisen.

Eine Gassackanordnung mit den vorgenannten Merkmalen ist in der EP 1 369 317 A2 beschrieben. Soweit die bekannte Gassackanordnung auf der Außenseite eines Fahrzeuges zum Schutze von Fußgängern angebracht ist, soll der zugehörige Gassack möglichst gleichmäßig aufgeblasen werden. Um einer gegebenenfalls unsymmetrischen Anordnung des Gasgenerators mit Bezug zu einem die Gasverteilung zu dem daran angeschlossenen Gassack vornehmenden textilen Deflektorelement Rechnung zu tragen, ist bei der bekannten Gassackanordnung bereits vorgesehen, den an dem Deflektorelement ausgebildeten Gasausströmbereichen jeweils einen unterschiedlichen Querschnitt zu geben, um unterschiedlich große Gasströme aus dem Deflektorelement austreten zu lassen. Hierzu sind einerseits an dem Deflektorelement Verbindungen, beispielsweise in Form von Nähten, von Bereichen seiner die Wandung bildenden Hülle vorgesehen und andererseits weisen die Gewebezuschnitte zur Ausbildung des textilen Deflektorelements eine asymmetrische Formgebung auf.

Eine derartige asymmetrische Formgebung ist nachteilig, weil gegebenenfalls für unterschiedliche Einbausituationen auch unterschiedliche Ausgestaltungen des Deflektorelements eingerichtet beziehungsweise vorgehalten werden müssen.

Der Erfindung liegt daher die Aufgabe zugrunde, bei einer Gassackanordnung mit den gattungsgemäßen Merkmalen die Ausgestaltung des Deflektorelements einfacher durchzuführen.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im Einzelnen vor, dass zur Ausbildung des unterschiedlichen Ausströmquerschnitts mit Abstand zur Überströmöffnung angeordnete und in Längsrichtung des rohrförmigen Deflektorelements verlaufende Verbindungen der den Gasausströmbereich umschließenden Hüllenabschnitte angeordnet sind, wobei die jeweils zu den gegenüberliegenden Öffnungen gerichteten Verbindungen an ihrem Ende einen unterschiedlichen Abstand zur Überströmöffnung einhalten. Mit der Erfindung ist der Vorteil verbunden, dass ein rechteckiger und damit eine zylindrische Form des Deflektorelements vorgebender Zuschnitt eingesetzt werden kann, wobei die unterschiedlichen Ausströmquerschnitte jeweils durch die erfindungsgemäße Positionierung der zugeordneten Verbindungen der Zuschnittsbereiche eingestellt sind. Insofern brauchen bei Anpassung an andere Einbausituationen lediglich die Lage der entsprechenden Verbindungen verändert zu werden, während die Form der Zuschnittbereiche beibehalten werden kann.

Im Einzelnen kann vorgesehen sein, dass in an sich bekannter Weise die im Gasausströmbereich angeordneten Verbindungen aus die Hüllenabschnitte verbindenden Nähten bestehen.

Entsprechend der in der DE 102005021371 A1 beschriebenen Konfiguration für eine Gassackanordnung kann nach einem Ausführungsbeispiel der Erfindung vorgesehen sein, daß die Gassackanordnung ein Seitenairbag ist, bei welchem der Gassack eine sich von einem ersten Ende zu einem zweiten Ende erstreckende obere Kante aufweist und die Längsachse des rohrförmigen Deflektorelements im wesentlichen parallel zu der oberen Kante ausgerichtet ist, wobei vorgesehen sein kann, daß der Gaseintrittsbereich des rohrförmigen Deflektorelements außerhalb des Gassacks angeordnet und der Gasausströmbereich im Inneren des Gassackes angeordnet ist.

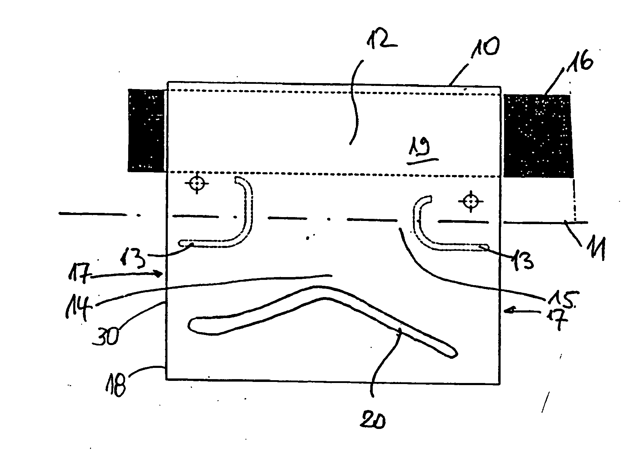

In der Zeichnung ist ein Ausführungsbeispiel der Erfindung wiedergegeben, welches nachstehend beschrieben ist. Die einzige Figur zeigt ein textiles Deflektorelement für eine gattungsgemäße Gassackanordnung mit unterschiedlich ausgelegten Ausströmquerschnitten seiner Öffnungen für den abströmenden Gasstrom in einer schematischen Ansicht.

Das aus der Zeichnung ersichtliche Deflektorelement 10 ist als ein rohrförmiger Körper mit einer die Rohrwandung bildenden umlaufenden textilen Hülle ausgestaltet. Dieser mit einer quer liegenden Längsachse 11 ausgerichtete rohrförmige Körper ist an seinen Stirnseiten 30 offen gehalten. Durch in den Deflektorquerschnitt eingebrachte Verbindungen 13, die beispielsweise als Abnäher ausgebildet sein können, ist das Deflektorelement 10 in einen Gaseintrittsbereich 12 und in einen Gasausströmbereich 14 unterteilt. Dabei sparen die jeweils außenliegenden Verbindungsnähte 13 eine mittlere Überströmöffnung 15 aus, über die Gas vom Gaseintrittsbereich 12 in den Gasausströmbereich 14 überströmen kann. In den Gaseintrittsbereich 12 ist ein nur schematisch dargestellter Gasgenerator 16 eingelegt, der bei seiner Zündung Gas freisetzt, welches über die Überströmöffnung 15 in den Gasausströmbereich 14 strömt.

Da, wie schon ausgeführt, die das Deflektorelement 10 bildende textile Hülle an ihren Stirnseiten 30 offen ist, ergeben sich im Gasausströmbereich 14 einander gegenüberliegende Öffnungen 17, die von seitlichen Endkanten 18 umschlossen sind.

In der Darstellung gemäß der Zeichnungsfigur ist generell der Hüllenzuschnitt für die Ausbildung des rohrförmigen Deflektorelements flach ausgelegt, so dass die jeweiligen, das rohrförmige Deflektorelement 10 ausbildenden Zuschnittsbereiche 19 aufeinander liegen.

Bei dem in der Zeichnung dargestellten Ausführungsbeispiel liegt ein rechteckiger und damit eine zylindrische Form des Deflektorelements 10 vorgebender Zuschnitt mit aufeinander liegenden Zuschnittsbereichen 19 vor, wobei nun zur Ausbildung unterschiedlich größer Ausströmquerschnitte an den Öffnungen 17 eine eine Verbindung der den Gasausströmbereich 14 umschließenden Hüllenabschnitte bildende Naht 20 angeordnet ist, die mit einem Abstand zur Überströmöffnung 15 des Deflektorelements 10 angeordnet ist. Der Verlauf der Naht 20 ist dabei so eingerichtet, dass die jeweils zu den gegenüberliegenden Öffnungen 17 gerichteten Enden der Naht 20 an ihrem Ende einen unterschiedlichen Abstand zur Überströmöffnung 15 einhalten. Es ist erkennbar, dass die auf der in der Darstellung der Zeichnung linken Seite des Hüllenzuschnitts angeordnete Öffnung 17 aufgrund des Verlaufs der Naht 20 einen geringeren Ausströmquerschnitt für die ausströmenden Gase aufweist als die durch die Naht 20 begrenzte gegenüberliegende, auf der rechten Seite des Hüllenzuschnitts angeordnete Öffnung 17.

## Patentansprüche

1. Gassackanordnung mit einem wenigstens eine aufblasbare Kammer aufweisenden Gassack und mit einem außerhalb der aufblasbaren Kammer angeordneten Gasgenerator (16), wobei zur Verbindung des Gasgenerators (16) mit der aufblasbaren Kammer ein an den Gasgenerator (16) angeschlossenes und in die aufblasbare Kammer reichendes, als rohrförmiger Körper ausgestaltetes Deflektorelement (10) aus einem textilen Gewebe vorgesehen ist, und wobei der Querschnitt des rohrförmigen Deflektorelements (10) durch in seiner Längsrichtung angeordnete Verbindungen (13) von Bereichen seiner die Rohrwandung bildenden Hülle in einen Gaseintrittsbereich (12) und einen Gasausströmbereich (14) unterteilt ist und die Verbindungen (13) eine Überströmöffnung (15) für den radial zur Längsachse des rohrförmigen Deflektorelements (10) vom Gaseintrittsbereich (12) zum Gasausströmbereich (14) verlaufenden Gasstrom aussparen und die beiden einander gegenüberliegenden stirnseitigen Öffnungen (17) des Gasausströmbereichs (14) jeweils einen unterschiedlichen Ausströmquerschnitt aufweisen, **dadurch gekennzeichnet, dass** zur Ausbildung des unterschiedlichen Ausströmquerschnitts mit Abstand zur Überströmöffnung (15) angeordnete und in Längsrichtung des rohrförmigen Deflektorelements (10) verlaufende Verbindungen (20) der den Gasausströmbereich (14) umschließenden Hüllenabschnitte angeordnet sind, wobei die jeweils zu den gegenüberliegenden Öffnungen (17) gerichteten Verbindungen (20) an ihrem Ende einen unterschiedlichen Abstand zur Überströmöffnung (15) einhalten.

2. Gassackanordnung nach Anspruch 1, **dadurch gekennzeichnet, dass** die im Gasausströmbereich (14) angeordneten Verbindungen aus die Hüllenabschnitte verbindenden Nähten (20) bestehen.

3. Gassackanordnung nach Anspruch 1 oder 2, **dadurch gekennzeichnet, dass** die Gassackanordnung ein Seitenairbag ist, bei welchem der Gassack eine sich von einem ersten Ende zu einem zweiten Ende erstreckende obere Kante aufweist und die Längsachse (11) des rohrförmigen Deflektorelements (10) im wesentlichen parallel zu der oberen Kante ausgerichtet ist.

4. Gassackanordnung nach Anspruch 3, **dadurch gekennzeichnet, dass** der Gaseintrittsbereich (12) des rohrförmigen Deflektorelements (10) außerhalb des Gassacks angeordnet und der Gasausströmbereich (14) im Inneren des Gassackes angeordnet ist.

## Claims

1. An airbag arrangement, comprising an airbag having at least one inflatable chamber and a gas generator (16) disposed outside the inflatable chamber, wherein a deflector element (10), which is made of a textile fabric, is provided for connecting the gas generator (16) to the inflatable chamber, said deflector element being connected to the gas generator (16) and extending into the inflatable chamber and being designed as a tubular member, and the cross-section of the tubular deflector element (10) being subdivided into a gas inlet area (12) and a gas outflow area (14) by way of connections (13) of areas of the deflector element shell that forms the tube wall, said connections being disposed in the longitudinal direction of said deflector element, and the connections (13) sparing an overflow opening (15) for the gas stream running from the gas inlet area (12) to the gas outflow area (14) radially with respect to the longitudinal axis of the tubular deflector element (10) and the two opposing end openings (17) of the gas outflow area (14) each having a different outflow cross-section, **characterised in that**, in order to form the different outflow cross-section, connections (20) of the shell sections enveloping the gas outflow area (14) are disposed, said connections being disposed at a distance to the overflow opening (15) and running in the longitudinal direction of the tubular deflector element (10), wherein the connections (20), which always face the opposite openings (17), maintain a different distance to the overflow opening (15) at their ends.

2. An airbag arrangement according to claim 1, **characterised in that** the connections disposed in the gas outflow area (14) consist of seams (20) which connect the shell sections.

3. An airbag arrangement according to claim 1 or 2, **characterised in that** the airbag arrangement is a side airbag in which the airbag has an upper edge extending from a first end to a second end and the longitudinal axis (11) of the tubular deflector element (10) is aligned essentially parallel to the upper edge.

4. An airbag arrangement according to claim 3, **characterised in that** the gas inlet area (12) of the tubular deflector element (10) is disposed outside the airbag and the gas outflow area (14) is disposed inside the airbag.

## Revendications

1. Agencement de coussin gonflable avec un coussin gonflable présentant au moins une chambre gonflable et avec un générateur de gaz (16) disposé en dehors de la chambre gonflable, sachant qu'il est prévu, pour relier le générateur de gaz (16) à la chambre gonflable, un élément déflecteur (10) constitué d'un tissu textile, se présentant sous la forme d'un corps tubulaire, raccordé au générateur de gaz (16) et s'étendant jusque dans la chambre gonflable, et sachant que la section transversale de l'élément déflecteur tubulaire (10) est subdivisée en une région d'entrée de gaz (12) et une région de sortie de gaz (14) par des liaisons (13), disposées dans sa direction longitudinale, de régions de son enveloppe formant la paroi du tube, que lesdites liaisons (13) ménagent une ouverture de trop-plein (15) pour le flux de gaz s'étendant radialement à l'axe longitudinal de l'élément déflecteur tubulaire (10) de la région d'entrée de gaz (12) à la région de sortie de gaz (14), et que les deux ouvertures frontales (17) de la région de sortie de gaz (14) qui se font face présentent chacune une section transversale de sortie différente, **caractérisé en ce que**, afin de former la section transversale de sortie différente, il est prévu des liaisons (20), disposées à distance de l'ouverture de trop-plein (15) et s'étendant dans la direction longitudinale de l'élément déflecteur tubulaire (10), des segments d'enveloppe qui entourent la région de sortie de gaz (14), sachant que les liaisons (20) respectivement dirigées vers les ouvertures en vis-à-vis (17) respectent à leur extrémité une distance différente par rapport à l'ouverture de trop-plein (15).

2. Agencement de coussin gonflable selon la revendication 1, **caractérisé en ce que** les liaisons disposées dans la région de sortie de gaz (14) consistent en des coutures (20) reliant les segments d'enveloppe.

3. Agencement de coussin gonflable selon la revendication 1 ou 2, **caractérisé en ce que** l'agencement de coussin gonflable est un coussin gonflable de sécurité (airbag) latéral, dans le cas duquel le coussin gonflable présente une arête supérieure s'étendant d'une première extrémité à une deuxième extrémité et l'axe longitudinal (11) de l'élément déflecteur tubulaire (10) est orienté sensiblement parallèlement à l'arête supérieure.

4. Agencement de coussin gonflable selon la revendication 3, **caractérisé en ce que** la région d'entrée de gaz (12) de l'élément déflecteur tubulaire (10) est disposée en dehors du coussin gonflable et la région de sortie de gaz (14) est disposée à l'intérieur du coussin gonflable.
